(19) Europäisches Patentamt
European Patent Office
Office européen des brevets

(11) Numéro de publication: **0 125 163**
**B1**

(12) **FASCICULE DE BREVET EUROPEEN**

(45) Date de publication du fascicule du brevet: **01.07.87**

(51) Int. Cl.[4]: **D 21 C 11/04,** D 21 H 1/22, C 01 D 1/22, C 01 F 11/18

(21) Numéro de dépôt: **84400774.0**

(22) Date de dépôt: **18.04.84**

(54) **Traitement des liqueurs entrant dans le cycle de caustification du procédé Kraft en vue de l'utilisation ultérieure du carbonate de calcium.**

(30) Priorité: **18.04.83 FR 8306281**

(43) Date de publication de la demande:
**14.11.84 Bulletin 84/46**

(45) Mention de la délivrance du brevet:
**01.07.87 Bulletin 87/27**

(84) Etats contractants désignés:
**AT BE CH DE FR GB IT LI LU NL SE**

(56) Documents cités:
**GB-A- 117 414**
**US-A-1 587 679**
**US-A-1 894 620**
**US-A-2 062 255**
**US-A-2 211 908**
**US-A-2 979 380**
**US-A-3 268 388**

(73) Titulaire: **LES PAPETERIES DE CONDAT**
**F-24170 Condat le Lardin (FR)**

(72) Inventeur: **Raoux, Henriette**
**20 rue de Préssenssé**
**F-33110 Le Bouscat (FR)**
Inventeur: **Jarrioz, Christian**
**Les Granges Cublac**
**F-19520 Mansac (FR)**
Inventeur: **Vives, Michel**
**Tranche**
**F-24120 Terrasson (FR)**

(74) Mandataire: **Muller, René et al**
**SAINT-GOBAIN RECHERCHE 39, quai Lucien Lefranc**
**F-93304 Aubervilliers (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 125 163 B1

**Description**

L'invention concerne un procédé de traitement des liqueurs entrant dans le cycle de la caustification pour la préparation de pâtes kraft, ce procédé permettant la récupération d'un carbonate de calcium utilisable notamment en tant que charge et pigment, en particulier comme pigment de couchage pour le papier.

Le procédé kraft de cuisson des bois dans la papeterie utilise des produits chimiques qui sont généralement récupérés ou recyclés. Ainsi, la combustion des liqueurs noires fournit le salin constitué notamment de sulfure de sodium $Na_2S$ et de carbonate de sodium $Na_2CO_3$ qui par dissolution à l'eau, généralement les eaux de lavage, constitue la liqueur verte. Au cours de la caustification, c'est-à-dire la transformation de la liqueur verte en liqueur blanche, il se forme en même temps un précipité de carbonate de calcium. Lorsque la papeterie dispose d'un four à chaux, ce carbonate de calcium $CaCO_3$ est décarbonaté afin de régénérer la chaux qui est à nouveau utilisée pour la caustification. Mais lorsque la papeterie ne dispose pas d'un four à chaux, les boues de carbonate de calcium sont rejetées sous forme de déchets.

Par ailleurs, le carbonate de calcium est un produit largement utilisé en tant que pigment dans les compositions de couchage employées pour la fabrication des papiers couchés, et l'idée de récupérer le carbonate de calcium issu de la caustification a déjà été émise, le carbonate de calcium récupéré pouvant bien entendu être aussi utilisé dans d'autres industries telles que celles des peintures, des matières plastiques, etc. Mais jusqu'à présent elle n'a pas été réalisée car le carbonate de calcium récupéré à partir des boues de caustification présente une couleur gris-verdâtre et non pas un blanc nécessaire à une application en tant que pigment de couchage. La coloration gris-verdâtre serait due à la présence de carbone et de sels ferreux qui ne peuvent être éliminés des boues du carbonate de calcium.

D'autre part la granulométrie des carbonates de calcium ainsi récupérés est beaucoup trop élevée pour cette application.

Le cycle de caustification couramment utilisé comprend une dissolution du salin constitué principalement de sulfure de sodium et de carbonate de sodium par toute l'eau de lavage des carbonates de calcium, à la suite de quoi la liqueur verte obtenue est utilisée pour l'extinction de la chaux et la caustification proprement dite qui s'effectue selon la réaction chimique suivante:

$$Ca(OH)_2 + Na_2CO_3 \rightarrow CaCO_3 + 2NaOH$$

Après décantation ou après tout procédé permettant la séparation liqueur blanche-matières solides, la majeure partie de la liqueur blanche formée de la soude et du sulfure de sodium est filtrée pour être utilisée pour la cuisson des bois selon le procédé kraft. Les matières solides quant à elles sont lavées afin de récupérer la partie restante de la liqueur blanche qui est recyclée sous forme de liqueur blanche faible et il reste des boues de teinte gris-verdâtre contenant du carbonate de calcium qui peut être soit décarbonaté, soit rejeté sous forme de déchets inutilisables comme indiqué précédemment.

On a déjà essayé de produire des pigments utilisables conjointement au traitement des liqueurs dans le procédé de caustification par modification des conditions de caustification. Le brevet US 2 062 255 décrit une méthode de préparation de pigments conjointe au procédé de caustification. Dans ce brevet il est préconisé d'effectuer la caustification avec de la chaux éteinte au préalable par de l'eau bouillante, l'opération de caustification s'effectuant à une température inférieure ou égale à 75°C et sous agitation vigoureuse. Le pigment obtenu finalement est utilisable. Cependant ce procédé n'est pas retransposable industriellement. En effet, il faut refroidir à 75°C la chaux préalablement éteinte à l'eau bouillante d'où une perturbation du bilan thermique et une complication pour la régulation de la température de réaction.

On connait encore d'après le brevet US 3 268 388 la récupération du carbonate de calcium lors d'une caustification d'une partie de la liqueur verte par de la chaux éteinte solide. Dans ce cas, il est nécessaire d'opérer une sélection des grains de chaux quant à leur granulométrie.

L'invention propose un nouveau procédé de traitement des liqueurs entrant dans le cycle de la caustification pour la préparation des pâtes kraft qui permet la récupération d'un carbonate de calcium ayant une blancheur allant de 85 à 95 % (suivant la norme T 12 030: "Détermination du degré de blancheur "ISO" des pâtes") cette blancheur variant suivant la pureté initiale de la chaux utilisée et notamment de sa teneur en oxyde de fer et des séquences de blanchîment retenues. Le carbonate de calcium récupéré présente une granulométrie plus faible que celle habituellement obtenue par le procédé classique. Ces deux caractéristiques essentielles: blancheur et granulométrie permettent l'utilisation de ce pigment notamment en tant que pigment de couchage pour les papiers couchés.

Le procédé selon l'invention dont les caractéristiques essentielles sont présentes dans la revendication 1 comprend les opérations suivantes:

. dissolution du salin par au moins une partie de la liqueur blanche faible, provenant du lavage du carbonate de calcium, conduisant à une liqueur verte plus concentrée,

. filtration de la liqueur verte par tous moyens appropriés: décantation statique ou de préférence par centrifugation, ou filtration sur précouche à une température supérieure à environ 80°C, et de préférence supérieure à 90°C pour éviter des pertes thermiques et aussi pour faciliter la filtration,

. extinction de la chaux sous agitation, à une température de l'ordre de 100°C, ce qui donne un lait de chaux éteinte,

. caustification de la liqueur verte filtrée par addition du lait de chaux éteinte, à une température supérieure à 90°C et de préférence la plus élevée possible, cette caustification se faisant sous agitation,

. traitement du carbonate de calcium, notamment hydrocyclonage dans la liqueur blanche forte à la température la plus haute possible, de préférence supérieure à 80°C, pour faire une coupure granulométrique à une valeur désirée, par exemple de l'ordre de 15 µm. La surverse contient essentiellement les fines, c'est-à-dire les particules de dimensions inférieures à la granulomètrie indiquée d'environ 15 µm, avec au moins 50 % environ desdites particules fines ayant une granulométrie inférieure à 2 µm. La sousverse contient essentiellement les grenus, c'est-à-dire les particules de dimensions plus importantes, chargés de liqueur blanche forte qui peuvent être traités par décantation, filtration et peuvent être avantageusement utilisés pour la formation de précouche de filtration, par exemple le cas échéant pour la filtration sur précouche de la liqueur verte, séparation de la liqueur blanche forte liquide du précipité contenant le carbonate de calcium solide par tous moyens appropriés tels que filtration sous vide, filtration sous pression pour récupérer la liqueur blanche forte qui a la concentration nécessaire en produits actifs pour la cuisson du bois,

. lavage du précipité à une température supérieure à environ 80°C pour séparer le carbonate de calcium solide que l'on récupère de la liqueur blanche restante et des sels de fer solubles à cette température,

. recyclage de la liqueur blanche faible notamment pour la dissolution du salin.

Dans une variante, l'hydrocyclonage du carbonate de calcium peut être réalisé à un autre moment, par exemple au cours d'un blanchîment en milieu aqueux comme indiqué par la suite.

Cette suite d'opérations permet d'éliminer l'essentiel du carbone et des sels de fer solubles des boues contenant le carbonate de calcium et ainsi d'obtenir du carbonate de calcium utilisable notamment en tant que pigments pour le couchage des papiers couchés.

Suivant une caractéristique de l'invention, l'extinction de la chaux est effectuée avec une partie de la liqueur blanche faible provenant du lavage du carbonate de calcium, l'autre partie la plus importante en volume, étant toujours utilisée pour la dissolution du salin.

Dans ce cas, environ 1/3 du volume de la liqueur blanche faible provenant du lavage du carbonate de calcium est utilisée pour l'extinction de la chaux.

Dans une variante, l'extinction de la chaux est effectuée avec de l'eau. L'extinction par de l'eau présente comme avantage de permettre d'utiliser toute la liqueur blanche faible provenant du lavage du carbonate de calcium pour la dissolution du salin et d'éliminer les incuits et les graviers de la chaux par les moyens traditionnels utilisés dans les extincteurs. Mais cet apport d'eau pour l'extinction perturbe le bilan hydraulique. Il est nécessaire par la suite, d'atteindre la concentration désirée de la liqueur blanche par tous les moyens appropriés tels que réduction partielle du volume d'eau envoyée au dissolveur ou concentration de la chaux éteinte obtenue, etc...

Le procédé selon l'invention peut avantageusement comprendre des opérations complémentaires.

Suivant la coloration du carbonate de calcium recueilli après lavage du précipité, coloration liée notamment à la teneur en oxyde ferrique $Fe_2O_3$ de la chaux utilisée, il peut être avantageux d'effectuer un blanchîment par l'action d'un oxydant tel que le peroxyde d'hydrogène $H_2O_2$, l'eau de javel Na OCl, qui transforme les ions ferreux restant de couleur verte en ions ferriques. On peut aussi éventuellement utiliser un complexant du fer par exemple la triéthanolamine TEA. Le blanchîment permet notamment d'atténuer les fluctuations de blancheur de carbonate de calcium liées aux fluctuations d'un procédé industriel et des matières premières utilisées.

De préférence, on utilise un agent de blanchîment qui ne nécessite pas un lavage ultérieur du carbonate de calcium. A cet effet, le peroxyde d'hydrogène $H_2O_2$ est avantageux.

Il peut être avantageux d'effectuer une caustification partielle, généralement limitée à 10 % de la liqueur verte avant sa filtration. Une caustification d'environ 5 %, c'est-à-dire une formation d'environ 5 % du carbonate de calcium dans une réaction totale renforce l'efficacité de la filtration ultérieure de la liqueur verte et l'élimination du carbone et d'une partie des sels de fer. Bien entendu, le carbonate de calcium formé à ce stade n'est pas récupéré par la suite.

Sous un des aspects avantageux de l'invention, le carbonate de calcium récupéré après lavage du précipité peut subir un broyage assurant la granulomètrie désirée, notamment lorsqu'on désire obtenir une granulométrie très fine, par exemple 90 % des grains ayant des dimensions inférieures à 2 µm et 50 % des grains ayant des dimenions inférieures à 1 µm.

Il est alors avantageux d'effectuer le blanchîment au cours du broyage.

Des exemples de réalisation du procédé de caustification avec récupération du carbonate de calcium, selon l'invention, sont décrits en relation avec la figure 1. Cette figure comprend une succession de cases correspondant chacune à une opération de procédé.

Exemple 1:

Les débits indiqués correspondent à une production horaire moyenne d'environ 8,2 tonnes de pâte blanchie par le procédé kraft.

A la case A, le salin 1 constitué essentiellement de $Na_2CO_3$ et $Na_2S$ est dissous par 30 $m^3$/heure de liqueur blanche faible $2_2$, recyclée; on forme ainsi la liqueur verte 3 à une température d'environ 95°C. La liqueur verte est ensuite filtrée à la case C à une température de 95°C afin d'éliminer des

impuretés 4 solides à cette température, telles du carbone et une partie des sels de fer qui se trouvent sous forme ferreux. A la case D, on réalise la caustification à environ 100°C par action du carbonate de sodium de la liqueur verte sur la chaux 5 préalablement éteinte en case E. L'extinction se fait par réaction de la partie $2_1$ soit 10 $m^3$ de la liqueur blanche faible 2 recyclée, sur 2,5 tonnes/heure d'une composition 6 contenant 90 % de chaux vive et ceci à une température de 100°C, avec élimination des impuretés solides 7.

On utilise environ 25 $m^3$/heure de liqueur verte ce qui en sortie de la caustification procure environ 35 $m^3$/heure d'une composition 8, contenant de la liqueur blanche forte.

Cette composition 8 subit un hydrocyclonage en case F, à une température de 85°C, qui sépare les particules de carbonate de calcium de granulométries inférieures à environ 15 µm de celles ayant des granulométries supérieures. La partie 9 contenant les grenus peut être éliminée par mise à la décharge après lavage pour en retirer le maximum de produit, notamment la liqueur banche, ou le cas échéant utilisée pour la filtration en case C en tant que précouche si la filtration sur précouche est retenue. La partie 10 contenant les fines particules de carbonate de calcium et la liqueur blanche forte est filtrée en case G, la liqueur blanche forte 11 est récupérée pour être utilisée ultérieurement pour la cuisson du bois et le précipité 12 comprenant le carbonate de calcium avec une partie restante de liqueur blanche est envoyé au lavage dans la case H. Dans cette case on lave le précipité avec 40 $m^3$/heure d'eau 13 à 80°C. La phase liquide obtenue, environ 40 $m^3$/heure constitue la liqueur blanche faible 2 qui est recyclée, une partie $2_1$ de 10 $m^3$/heure pour l'extinction de la chaux vive comme décrit précédemment en case E, l'autre partie $2_2$ de 30 $m^3$/heure pour la dissolution du salin et formation de la liqueur verte en case A.

Le précipité 12 après lavage dans la case H est formé essentiellement de carbonate de calcium 14. Le carbonate de calcium récupéré présente déjà une blancheur supérieure à 85 % qui le rend apte notamment pour une utilisation en tant que pigment de couchage pour le papier. On récupère ainsi environ 4 tonnes/heure de carbonate de calcium.

Si l'on désire obtenir une blancheur encore supérieure ou pour réduire les fluctuations de blancheur on peut prévoir en case I une opération de blanchîment du carbonate de calcium par action d'un oxydant 15 tel l'eau de javel ou du peroxyde d'hydrogène $H_2O_2$ qui transforme les sels ferreux en sels ferriques. Ce blanchîment est éventuellement suivi d'un lavage en case J par de l'eau 16 à température d'environ 20°C afin d'éliminer les traces d'oxydant si nécessaire.

Exemple 2:

On opère de la même façon que dans l'exemple 1, sauf que l'hydrocylonage de la case F après caustification est supprimé et remplacé par un hydrocyclonage en case $F_1$ qui sépare le carbonate de calcium récupéré $14_1$, des grenus $9_1$.

Exemple 3:

On opère de la même façon que dans l'exemple 1, sauf qu'on réalise une caustification en case B d'environ 5 % de la liqueur verte avant sa filtration. On forme ainsi un précipité de carbonate de calcium qui facilite la filtration en case C.

Exemple 4:

On opère de la même façon que dans l'exemple 1, sauf qu'on effectue l'extinction de la chaux par de l'eau 17 à raison de 30 $m^3$/heure et que toute la liqueur blanche faible à savoir 33 $m^3$/heure est utilisée pour la dissolution du salin. Le lait de chaux éteinte 5 est concentré en case $E_1$ avec élimination de 23 $m^3$/heure d'eau 18.

Exemple 5:

On opère de la même façon que dans l'exemple 1, sauf que le carbonate de calcium récupéré 14 subit un broyage humide en case K avant ou après le blanchîment et avantageusement au cours du blanchîment.

**Revendications**

1. Procédé de traitement des liqueurs entrant dans le cycle de la caustification en vue de la cuisson du bois par le procédé kraft permettant d'obtenir du carbonate de calcium utilisable notamment en tant que pigment de couchage pour le papier, caractérisé en ce qu'il comprend les opérations suivantes:

— dissolution du salin par au moins une partie de la liqueur blanche faible, provenant du lavage du carbonate de calcium, conduisant à une liqueur verte plus concentrée,

— filtration de la liqueur verte à une température supérieure à environ 80°C,

— extinction de la chaux à une température d'environ 100°C,

— caustification de la liqueur verte filtrée, à une température supérieure à 90°C, par addition du lait de chaux éteinte obtenu,

— séparation de la liqueur blanche forte du précipité contenant le carbonate de calcium,

— lavage du précipité par de l'eau à une température supérieure à environ 80°C pour séparer le carbonate de calcium solide de la liqueur blanche restante et des sels de fer solubles à cette température,

— récupération du carbonate de calcium qui a subi un traitement, notamment un hydrocyclonage, pour lui donner la granulométrie désirée, inférieure à environ 15 µm,

— recyclage de la liqueur blanche faible notamment pour la dissolution du salin.

2. Procédé selon la revendication 1, caractérisé en ce que l'extinction de la chaux est effectuée par une partie de la liqueur blanche faible provenant du lavage du carbonate de calcium.

3. Procédé selon la revendication 2, caractérisé en ce que la partie de la liqueur blanche faible utilisée pour l'extinction de la chaux correspond en volume à environ 1/3 de la liqueur blanche faible provenant du lavage du carbonate.

4. Procédé selon la revendication 1, caractérisé en ce que l'extinction de la chaux est effectuée par de l'eau, le lait de chaux éteinte obtenue étant ensuite concentré avant la caustification.

5. Procédé selon une des revendications 1 à 4, caractérisé en ce que l'hydrocyclonage est réalisé dans la liqueur blanche forte obtenue après la caustification.

6. Procédé selon la revendication 5, caractérisé en ce que l'hydrocyclonage est réalisé à une température supérieure à 80°C.

7. Procédé selon une des revendications 1 à 6, caractérisé en ce que la température de l'eau de lavage du précipité est comprise entre 80 et 100°C.

8. Procédé selon une des revendications 1 à 7, caractérisé en ce qu'on effectue un blanchîment du carbonate de calcium récupéré.

9. Procédé selon la revendication 8, caractérisé en ce que le blanchîment s'effectue à l'aide d'un oxydant, notamment le peroxyde d'hydrogène, l'eau de javel, et les complexants du fer notamment la triéthanolamine.

10. Procédé selon la revendication 9, caractérisé en ce que le blanchîment s'effectue avec du peroxyde d'hydrogène.

11. Procédé selon une des revendications 1 à 10, caractérisé en ce qu'on effectue une caustification partielle limitée à 10 % de la liqueur verte avant sa filtration.

12. Procédé selon une des revendications 1 à 11, caractérisé en ce qu'après le lavage du précipité et récupération du carbonate de calcium, celui-ci subit un broyage.

13. Procédé selon la revendication 12, caractérisé en ce que le broyage et le blanchîment sont effectués simultanément.

**Patentansprüche**

1. Verfahren zur Behandlung von Flüssigkeiten aus dem Kaustifizierzyklus zum Kochen von Holz durch das sogenannte Kraft-Verfahren, bei dem Kalziumkarbonat erhalten wird, das insbesondere als Gautschpigment für Papier verwendbar ist, gekennzeichnet

— durch Auflösung von Salz durch mindestens einen Teil der schwachen Weißlauge aus der Kalziumkarbonatwäsche, zur Erzeugung einer konzentrierteren Grünlauge,

— Filtern der Grünlauge bei einer Temperatur oberhalb etwa 80 °C,

— Löschen des Kalkes bei einer Temperatur von etwa 100 °C,

— Kaustifizieren der filtrierten Grünlauge bei einer Temperatur größer als 90 °C durch Zusatz von Milch aus dem erhaltenen gelöschten Kalk,

— Trennung der starken Weißlauge von dem das Kalziumkarbonat enthaltenden Niederschlag,

— Waschen des Nederschlages mit Wasser bei einer Temperatur größer als etwa 80 °C zwecks Abtrennen des festen Kalziumkarbonates von der restlichen Weißlauge und den bei dieser Temperatur lösbaren Eisensalzen,

— Wiedergewinnung des Kalziumkarbonates, das einer Behandlung, insbesondere Hydrozyklonbehandlung unterzogen wird, um eine gewünschte Granulometrie von weniger als etwa 15 µm zu erhalten,

— Rückführung der schwachen Weißlauge insbesondere für die Auflösung des Salzes.

2. Verfahren nach Anspruch 1, dadurch gekennzeichnet, daß das Löschen des Kalks durch einen Teil der von der Waschung des Kalziumkarbonates herrührenden schwachen Weißlauge bewirkt wird.

3. Verfahren nach Anspruch 2, dadurch gekennzeichnet, daß der Teil der für das Löschen des Kalkes verwendeten schwachen Weißlauge im Volumen etwa 1/3 der aus der Karbonatwäsche herrührenden schwachen Weißlauge entspricht.

4. Verfahren nach Anspruch 1, dadurch gekennzeichnet, daß das Löschen des Kalkes durch Wasser bewirkt wird und die dabei erhaltene Milch vor dem Kaustifizieren konzentriert wird.

5. Verfahren nach einem der Ansprüche 1 bis 4, dadurch gekennzeichnet, daß die Hydrozyklonbehandlung in der nach dem Kaustifizieren erhaltenen starken Weißlauge vorgenommen wird.

6. Verfahren nach Anspruch 5, dadurch gekennzeichnet, daß die Hydrozyklonbehandlung bei einer Temperatur von mehr als 80 °C durchgeführt wird.

7. Verfahren nach einem der Ansprüche 1 bis 6, dadurch gekennzeichnet, daß die Temperatur des Wassers für die Waschbehandlung des Niederschlages zwischen 80 und 100 °C liegt.

8. Verfahren nach einem der Ansprüche 1 bis 7, dadurch gekennzeichnet, daß ein Bleichen des wiedergewonnenen Kalziumkarbonates bewirkt wird.

9. Verfahren nach Anspruch 8, dadurch gekennzeichnet, daß das Bleichen mit Hilfe eines Oxidationsmittels, insbesondere Wasserstoffperoxid, Javellauge, und Komplexbildner des Eisens, insbesondere Triäthanolamin, durchgeführt wird.

10. Verfahren nach Anspruch 9, dadurch gekennzeichnet, daß das Bleichen mit Wasserstoffperoxid ausgeführt wird.

11. Verfahren nach einem der Ansprüche 1 bis 10, dadurch gekennzeichnet, daß eine teilweise auf 10 % der Grünlauge vor ihrer Filtrierung begrenzte Kaustifizierung durchgeführt wird.

12. Verfahren nach einem der Ansprüche 1 bis 11, dadurch gekennzeichnet, daß nach dem Waschen des Niederschlages und der Wiedergewinnung des Kalziumkarbonates dieses einem Mahlvorgang unterzogen wird.

13. Verfahren nach Anspruch 12, dadurch gekennzeichnet, daß der Mahlvorgang und das Bleichen gleichzeitig durchgeführt werden.

**Claims**

1. Method of treating liquors used in the causticisation cycle for digestion of wood by the kraft process allowing obtaining of calcium carbonate which may be used, notably, as a pigment for coating paper, characterised in that it comprises the following operations:

dissolving of the saline material in at least part of the weak white liquor, obtained from washing of the calcium carbonate, giving a more concentrated green liquor,

filtering of the green liquor at a temperature greater than about 80°C,

slaking of the lime at a temperature of about 100°C,

causticising the filtered green liquor at a temperature greater than 90°C by addition of the milk of slaked lime obtained,

separating the strong white liquor from the precipitate containing calcium carbonate,

washing the precipitate with water at a temperature greater than about 80°C to separate the solid calcium carbonate from the remaining white liquor and soluble iron salts at this temperature,

recovering the calcium carbonate which has been subjected to treatment, notably hydrocycloning, to give it the desired grain size, less than about 15 µm,

recycling the weak white liquor, notably for dissolving of the saline material.

2. Method according to claim 1, characterised in that slaking of the lime is carried out using part of the weak white liquor obtained from washing the calcium carbonate.

3. Method according to claim 2, characterised in that the part of the weak white liquor used for slaking the lime corresponds in volume to about 1/3 of the weak white liquor obtained from washing of the carbonate.

4. Method according to claim 1, caracterised in that slaking of the lime is carried out with water, the milk of slaked lime obtained then being concentrated before causticisation.

5. Method according to one of claims 1 to 4, characterised in that hydrocycloning is carried out in the strong white liquor obtained after causticisation.

6. Method according to claim 5, characterised in that hydrocycloning is carried out at a temperature greater than 80°C.

7. Method according to one of claims 1 to 6, characterised in that the temperature of the wash water for the precipitate is from 80 to 100°C.

8. Method according to one of claims 1 to 7, characterised in that the recovered calcium carbonate is bleached.

9. Method according to claim 8, characterised in that bleaching is carried out using an oxidising agent notably hydrogen peroxide, sodium hypochlorite solution, and complexing agents for iron notably triethanolamine.

10. Method according to claim 9, characterised in that bleaching is carried out using hydrogen peroxide.

11. Method according to one of claims 1 to 10, characterised in that there is carried out a partial causticisation limited to 10% of the green liquor before filtration.

12. Method according to one of claims 1 to 11, characterised in that after washing of the precipitate and recovery of the calcium carbonate, the latter is ground.

13. Method according to claim 12, characterised in that the grinding and bleaching are carried out simultaneously.

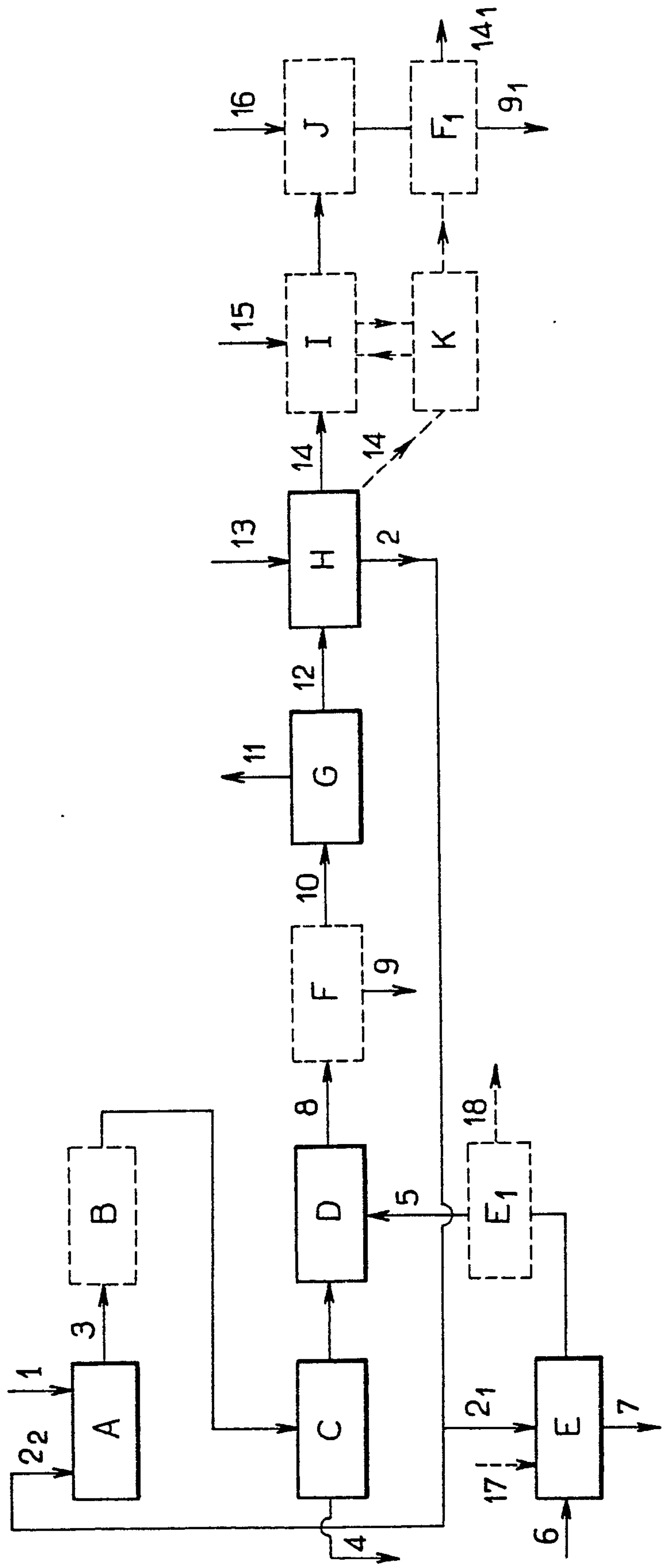
A
B
C
D
E
$E_1$
F
$F_1$
G
H
I
J
K
1
$2_2$
3
4
5
6
7
$2_1$
17
18
8
9
10
11
12
13
2
14
14
15
16
$9_1$
$14_1$